# EUROPÄISCHE PATENTSCHRIFT

(11) **EP 3 152 068 B1**
(45) Veröffentlichungstag und Bekanntmachung des Hinweises auf die Patenterteilung: **16.05.2018**
(21) Anmeldenummer: 15711512.2
(22) Anmeldetag: 23.03.2015
(51) Int. Cl.: B60C 11/24, B60C 11/00, B60C 11/04, B60C 11/13

(54) **FAHRZEUGLUFTREIFEN**
PNEUMATIC VEHICLE TYRE
PNEUMATIQUE DE VÉHICULE

(30) Priorität: 05.06.2014 DE 102014210715
(43) Veröffentlichungstag der Anmeldung: 12.04.2017
(73) Patentinhaber: Continental Reifen Deutschland GmbH, 30165 Hannover (DE)
(72) Erfinder: LUTZ, Andre, 30167 Hannover (DE); KRISTEN, Florian, 30171 Hannover (DE)
(74) Vertreter: Finger, Karsten
(86) Internationale Anmeldenummer: PCT/EP2015/056031
(87) Internationale Veröffentlichungsnummer: WO 2015/185233

(56) Entgegenhaltungen:
- WO-A1-2013/087473

## Beschreibung

Die Erfindung betrifft ein Laufstreifenprofil eines Fahrzeugluftreifens - insbesondere für Nutzfahrzeuge - mit nachschneidbarem Laufstreifenprofil mit radial erhabenen Profilelementen und mit Rillen, welche jeweils zwei benachbarte Profilelemente voneinander trennen, wobei die Rillen in radialer Richtung R nach innen hin von einem Rillengrund und in axialer Richtung zu beiden Seiten hin von einer die Rillenwand bildenden Profilelementflanke begrenzt sind und wobei in einer oder mehreren Rillen jeweils wenigstens ein Nachschneideindikator zur Anzeige der Nachscheidetiefe ausgebildet ist.

Es ist bekannt, Fahrzeugluftreifen mit einem Laufstreifenprofil auszubilden, bei welchem radial erhabene Profilelemente durch Rillen voneinander beabstandet sind. Die Laufstreifenprofile sind dabei mit einer für den jeweiligen Einsatz optimierten Profiltiefe ausgebildet. Die Rillen sind dabei über ihren wesentlichen Erstreckungsbereich hinweg maximal mit der maximalen Profiltiefe ausgebildet.

Bei Nutzfahrzeugluftreifen ist es bekannt, das Laufstreifenprofil für den Einsatz optimiert unter Einschluss einer zu diesem Zweck optimiert eingestellten Profiltiefe auszubilden. Viele Nutzfahrzeugreifen sind mit über den Umfang des Reifens erstreckten Umfangsrillen und mit von diesen Umfangsrillen getrennten Umfangsrippen oder über den Umfang erstreckten Profilblockreihen ausgebildet. Dabei sind die relativ breiten Umfangsrillen über ihren wesentlichen Erstreckungsbereich über den Umfang des Reifens hinweg mit maximaler Profiltiefe ausgebildet.

Bei derartigen Nutzfahrzeugluftreifen ist es darüber hinaus bekannt, zur Verlängerung der Lebensleistung des Reifens, den Laufstreifen mit zusätzlicher Materialdicke auszubilden, so dass zwischen dem Gürtel des Nutzfahrzeugreifens und der Reifenoberfläche relativ viel Gummimaterial auch unterhalb des Rillenbodens der Umfangsrillen ausgebildet ist. Die für den optimalen Einsatz eines Neureifens bestimmte Profiltiefe wird durch die Ausbildung mit dem - wie üblich - optimierten Profil mit hierfür geeigneter maximaler Profiltiefe erhalten. Sobald das Laufstreifenprofil soweit abgefahren ist, dass die erforderliche Mindestprofiltiefe verbleibt, können derartige Nutzfahrzeugluftreifen in ihrem Laufstreifenprofil noch einmal nachgeschnitten werden. Die Nachschneidbarkeit wird am Nutzfahrzeugreifen gekennzeichnet.
Für den Nutzer von Nutzfahrzeugluftreifen ist es dabei wichtig zu erkennen, wann das Laufstreifenprofil soweit abgefahren ist, dass es spätestens nachgeschnitten werden sollte. Ein früheres Nachschneiden mit den hierfür eingesetzten Nachschneidewerkzeugen ist zwar möglich, allerdings wird dabei ein nachteiliges Abriebergebnis des Nutzfahrzeugluftreifens erzielt. Die aufgrund des bereitgestellten Gummimaterials des Laufstreifens zur Verfügung gestellte mögliche maximale Lebensdauer des Reifens wird somit nicht ausgenutzt. Ein deutlich zu spätes Nachschneiden mit Hilfe der üblichen Nachschneidemesser birgt die Möglichkeit einer schlechteren Reifenperformance durch eine zu geringe Rillentiefe.
Es ist bekannt, Nachschneideindikatoren in einer Rille auszubilden, die dem Nutzer bei Erreichen einer bestimmten Abriebleistung anzeigen, dass die empfohlene Profiltiefe erreicht ist, in der spätestens das Nachschneiden durchgeführt werden sollte. Die bekannten Nachschneideindikatoren sind dabei im Rillengrund ausgebildet und erstrecken sich ausgehend vom Rillengrund in radialer Richtung nach außen. Beispielsweise sind derartige Nachschneideindikatoren aus der US 2012/0266650A1 oder der gattungsbildenden Druckschrift WO 2013/087473 A1 bekannt. Die bekannten Nachschneideindikatoren bilden dabei durch ihre Positionierung im Rillengrund Staustellen für den Abfluss von Wasser, was sich gerade bei der aufgrund des Abriebes zunehmend reduzierten Profiltiefe negativ auf die Nässeeigenschaften des Fahrzeugluftreifens auswirken kann.

Der Erfindung liegt die Aufgabe zugrunde, dem Nutzer derartiger Fahrzeugreifen in den Laufstreifenprofilen einfache Indikatoren zur Verfügung zu stellen, die in einfacher Weise anzeigen, wann das Laufstreifenprofil spätestens nachgeschnitten werden sollte, ohne die Nassgriffeigenschaften des Fahrzeugluftreifen merklich negativ zu beeinflussen. Die Aufgabe wird erfindungsgemäß durch die Ausbildung eines Laufstreifenprofils eines Fahrzeugluftreifens - insbesondere für Nutzfahrzeuge - mit nachschneidbarem Laufstreifenprofil mit radial erhabenen Profilelementen und mit Rillen, welche jeweils zwei benachbarte Profilelemente voneinander trennen, wobei die Rillen in radialer Richtung R nach innen hin von einem Rillengrund und in axialer Richtung zu beiden Seiten hin von einer die Rillenwand bildenden Profilelementflanke begrenzt sind und wobei in einer oder mehreren Rillen jeweils wenigstens ein Nachschneideindikator zur Anzeige der Nachscheidetiefe ausgebildet ist, gemäß den Merkmalen von Anspruch 1 gelöst, bei dem in wenigstens einer Rille alle darin ausgebildeten Nachschneideindikatoren mit einem einer in radialer Richtung R gemessenen Höhe H mit H>0mm oberhalb des Rillengrundes in einer Rillenwand ausgebildet sind, wobei die Höhe H der maximalen radialen Abriebposition des Reifens zum Nachschneiden entspricht.
Die Ausbildung mit den Nachschneideindikatoren in der Rillenwand mit Abstand zum Rillengrund ermöglicht weiterhin die einfache optische Anzeige des Erreichens der maximalen, radialen Abriebposition in der Höhe H oberhalb des Rillengrundes, bei der spätestens das Nachschneiden durchgeführt werden sollte. Sobald das Profil soweit abgefahren ist, dass der Nachschneideindikator in der Rillenwand nicht mehr optisch zu erkennen ist, ist diese Position erreicht und der Reifen sollte spätestens dann nachgeschnitten werden. Die Ausbildung in der Rillenwand mit radialem Abstand H zum Rillengrund ermöglicht den weitgehend barrierefreien Verlauf des Rillengrundes und somit die Sicherstellung des Abflusses von Wasser im Rillengrundbereich. Die Nässeeigenschaften des Profils können somit auch über die Lebensdauer des Reifens ohne Behinderungen des Abflusses im Rillengrund ermöglicht werden.

Besonders vorteilhaft ist die Ausbildung eines Laufstreifenprofils gemäß den Merkmalen von Anspruch 2, wobei in einer Rillenwand der Rille eine oder mehrere hintereinander angeordnete, über den Umfang des Reifens verteilt angeordnete Erhebungen der die Rillenwand bildenden Profilelementflanke in dem in radialer Richtung R gemessenen Abstand H mit H>0mm oberhalb des Rillengrundes ausgebildet sind, die jeweils einen Nachschneideindikator bilden. Hierdurch kann eine gute Sichtbarkeit der Nachschneideindikatoren erzielt werden ohne Verletzung der Geometrie der Rille.

Besonders vorteilhaft ist die Ausbildung eines Laufstreifenprofils gemäß den Merkmalen von Anspruch 3, wobei H mit 1,5mm≤H≤8mm ausgebildet ist. Diese Ausführung ist besonders vorteilhaft, weil hierdurch in einfacher Weise sichergestellt werden kann, dass vor Erreichen einer empfohlenen Mindestprofiltiefe nachgeschnitten wird. Damit ist nach dem Nachschneiden eine höhere Profiltiefe vorhanden, wodurch die Möglichkeit besteht, dass der Reifen nach dem Nachschneiden noch mit besseren Nässeeigenschaften ausgebildet sein kann.

Besonders vorteilhaft ist die Ausbildung eines Laufstreifenprofils gemäß den Merkmalen von Anspruch 4, wobei die Erhebung mit einer senkrecht zur Rillenwand gemessenen maximalen Erhebungshöhe c mit 0,2mm≤c≤3mm und mit einer ausgehend vom Abstand H vom Rillengrund längs der radialen Erstreckung der Erhebung in der Rillenwand gemessenen maximalen Erstreckungsbreite B mit 0,2mm≤B≤3mm ausgebildet ist. Hierdurch kann in einfacher Weise eine besonders gute Sichtbarkeit bei Minimierung des Einflusses auf die Reifenperformance umgesetzt werden.

Besonders vorteilhaft ist die Ausbildung eines Laufstreifenprofils gemäß den Merkmalen von Anspruch 5, wobei die Erhebung eine in Umfangsrichtung U des Reifens ausgerichtete rippenförmige Erhebung mit einer in der Rillenwand längs deren radialer Erstreckung gemessenen Rippenbreite B und mit einer senkrecht zur Rippenwand gemessenen Rippenhöhe c ausgebildet ist.

Besonders vorteilhaft ist die Ausbildung eines Laufstreifenprofils gemäß den Merkmalen von Anspruch 6, bei dem die rippenförmige Erhebung eine über den gesamten Umfang des Reifens erstreckte Rippe ist und dabei einen über den gesamten des Reifens erstreckten Nachschneideindikator bildet. Hierdurch kann über den gesamten Umfang des Reifens einfach der empfohlene Nachschneidezeitpunkt erkannt werden. Ein Bewegen des Fahrzeuges zum Verdrehen des Reifens ist hierfür nicht erforderlich.

Besonders vorteilhaft ist die Ausbildung eines Laufstreifenprofils gemäß den Merkmalen von Anspruch 7, bei dem die rippenförmige Erhebung als eine in Umfangsrichtung U erstreckte Rippe der in Umfangsrichtung in der Rillenwand gemessenen maximalen Erstreckungslänge L mit L≥2mm ist, bei dem über den Umfang des Reifens in der Rillenwand im Abstand H vom Rillengrund eine Vielzahl derartiger Rippen hintereinander verteilt und beabstandet voneinander angeordnet ausgebildet sind, die jeweils einen Nachschneideindikator bilden und bei dem insbesondere der in der Rillenwand gemessene Abstand a zweier in Umfangsrichtung U hintereinander angeordneter Rippen mit 2mm≤a≤25mm ausgebildet ist. Durch diese Ausbildung wird aufgrund der Beabstandung der Anzeigeeffekt erhöht und die Erkennbarkeit zusätzlich verbessert. Darüber hinaus kann im Zustand des bereits weitgehend abgefahrenen Profils vor dem Nachsschneiden durch die einzelnen Rippen die Traktion des Reifens und durch die Beabstandung die Nässeeigenschaft positiv beeinflusst werden.

Besonders vorteilhaft ist die Ausbildung eines Laufstreifenprofils gemäß den Merkmalen von Anspruch 8, wobei die Erhebung an ihrem Erhebungsgrund in der Rillenwand mit einer Schnittkontur ausgebildet ist, die oval, elliptisch oder dreieckig ist. Hierdurch wird die einfache Sichtbarkeit durch Verwendung einfacher optisch gut erfassbarer Elemente weiter verbessert. Darüber hinaus ermöglicht diese Ausbildung in einfacher, gut erfassbarer Weise eine Darstellung eines empfohlenen Zeitrahmens für das Nachschneiden.

Besonders vorteilhaft ist die Ausbildung eines Laufstreifenprofils gemäß den Merkmalen von Anspruch 9, wobei die Erhebung eine längs der Rillenwand erstreckte linienförmige Erhebung ist.

Besonders vorteilhaft ist die Ausbildung eines Laufstreifenprofils gemäß den Merkmalen von Anspruch 10, wobei die Erhebung über den gesamten Umfang des Reifens erstreckte linienförmige Erhebung ist.

Besonders vorteilhaft ist die Ausbildung eines Laufstreifenprofils gemäß den Merkmalen von Anspruch 11, bei dem die linienförmige Erhebung kreislinienförmig konzentrisch zur Reifenachse erstreckt ausgebildet ist.

Besonders vorteilhaft ist die Ausbildung eines Laufstreifenprofils gemäß den Merkmalen von Anspruch 12, bei dem die linienförmige Erhebung längs einer konzentrisch zur Reifenachse ausgebildeten Kreislinie wellenförmig oder mäanderförmig erstreckt ausgebildet ist.

Besonders vorteilhaft ist die Ausbildung eines Laufstreifenprofils gemäß den Merkmalen von Anspruch 13, bei dem die linienförmige Erhebung längs ihrer linienförmigen Erstreckung eine V-Form bildet, wobei die Spitze der V-Form in radialer Richtung R des Reifens nach innen weist und bei dem über den Umfang des Reifens hinweg eine Vielzahl derartiger linienförmigen Erstreckung verteilt und hintereinander angeordnet ausgebildet sind. Bei zunehmendem Abrieb wird die Breite des verbleibenden "V" verringert. Die Ausführung ermöglicht es somit in einfacher Weise zusätzlich optisch gut erkennbar - wie bei einem Count-Down - auf den nahenden Zeitpunkt des spätesten Nachschneidens hinzuweisen.

Die Erfindung wird im Folgenden an Hand der in den Figuren 1 bis 9 dargestellten Ausführungsbeispiele näher erläutert. Hierin zeigen
- Fig. 1: einen Umfangsabschnitt eines Laufstreifenprofils eines Nutzfahrzeugluftreifens in Draufsicht,
- Fig. 2: eine Querschnittsdarstellung einer Umfangsrille des Laufstreifenprofils von Fig.1 in Schnittdarstellung gemäß Schnitt II-II von Fig.1 zur Darstellung der Positionierung des Nachschneideindikators,
- Fig. 3: die Umfangsrille von Fig.2 mit Blick auf eine Rillenwand in Schnittdarstellung gemäß Schnitt III-III zur Erläuterung einer Ausführungsform des Nachschneideindikators,
- Fig. 4: eine analoge Darstellung zur Darstellung von Fig.3 mit alternativer Ausbildung eines Nachschneideindikators,
- Fig. 5: eine analoge Darstellung zur Darstellung von Fig.3 zur Erläuterung einer weiteren alternativen Ausführung eines Nachschneideindikators,
- Fig. 6: eine analoge Darstellung zur Darstellung von Fig.3 zur Erläuterung einer weiteren alternativen Ausführung eines Nachschneideindikators,
- Fig. 7: eine analoge Darstellung von Fig.3 zur Erläuterung einer weiteren alternativen Ausführung eines Nachschneideindikators,
- Fig. 8: eine analoge Darstellung von Fig.3 zur Erläuterung einer weiteren alternativen Ausführung eines Nachschneideindikators und
- Fig. 9: eine analoge Darstellung zur Fig.3 zur Erläuterung einer weiteren alternativen Ausführung eines Nachschneideindikators.

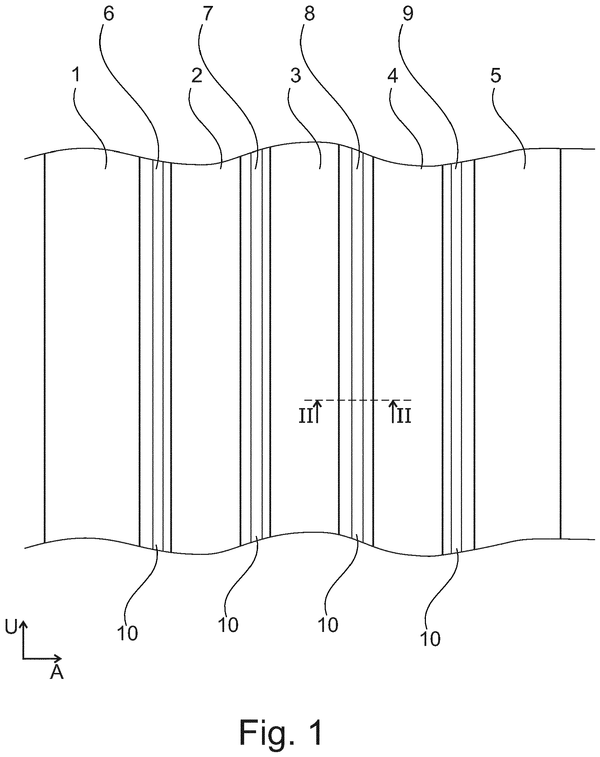

Die Figuren 1 bis 3 zeigen ein Laufstreifenprofil eines Nutzfahrzeugluftreifens mit mehreren in axialer Richtung A des Fahrzeugluftreifens nebeneinander angeordneten, über den gesamten Umfang des Fahrzeugluftreifens erstreckten und in Umfangsrichtung U ausgerichteten Umfangsrippen 1, 2, 3, 4 und 5. Die Umfangsrippe 1 bildet in dem in Fig.1 dargestellten Ausführungsbeispiel die linke Schulterrippe, die Umfangsrippe 5 bildet die rechte Schulterrippe. Die Umfangsrippe 1 und die Umfangsrippe 2 sind in axialer Richtung A nebeneinander angeordnet und durch eine über den gesamten Umfang des Fahrzeugluftreifens erstreckte und in Umfangsrichtung U ausgerichtete Umfangsrille 6 axial voneinander beabstandet. Die Umfangsrippe 2 und die Umfangsrippe 3 sind in axialer Richtung A des Fahrzeugluftreifens nebeneinander angeordnet und durch eine über den gesamten Umfang des Fahrzeugluftreifens erstreckte und in Umfangsrichtung U ausgerichtete Umfangsrille 7 voneinander beabstandet. Die Umfangsrippe 3 und die Umfangsrippe 4 sind in axialer Richtung A nebeneinander angeordnet und durch eine über den gesamten Umfang des Fahrzeugluftreifens erstreckte und in Umfangsrichtung U ausgerichtete Umfangsrille 8 voneinander beabstandet. Die Umfangsrippe 4 und die Umfangsrippe 5 sind in axialer Richtung A des Fahrzeugluftreifens nebeneinander angeordnet und durch eine über den gesamten Umfang des Fahrzeugluftreifens erstreckte und in Umfangsrichtung U ausgerichtete Umfangsrille 9 voneinander beabstandet.

Die Umfangsrippen 1, 2, 3, 4 und 5 sind in radialer Richtung R des Fahrzeugluftreifens nach außen hin durch eine die Bodenkontaktoberfläche bildende, radial äußere Oberfläche 11 begrenzt.

Die Umfangsrillen 6, 7, 8 und 9 sind in radialer Richtung R des Fahrzeugluftreifens nach innen hin durch einen über den gesamten Umfang des Fahrzeugluftreifen erstreckten Rillengrund 10 begrenzt.

Die Umfangsrillen 6, 7, 8 und 9 sind in axialer Richtung A des Fahrzeugluftreifens beiderseitig des Rillengrundes 10 jeweils durch Rillenwände 12 und 13 begrenzt. Der Rillengrund 10 ist somit axial zwischen den beiden Rillenwänden 12 und 13 ausgebildet. Die Umfangsrillen 6, 7, 8 und 9 sind jeweils mit einer in Position der radial äußeren Oberfläche 11 der angrenzenden Umfangsrippen mit einer in axialer Richtung gemessenen Rillenbreite b ausgebildet mit 3mm ≤ b ≤ 30mm.

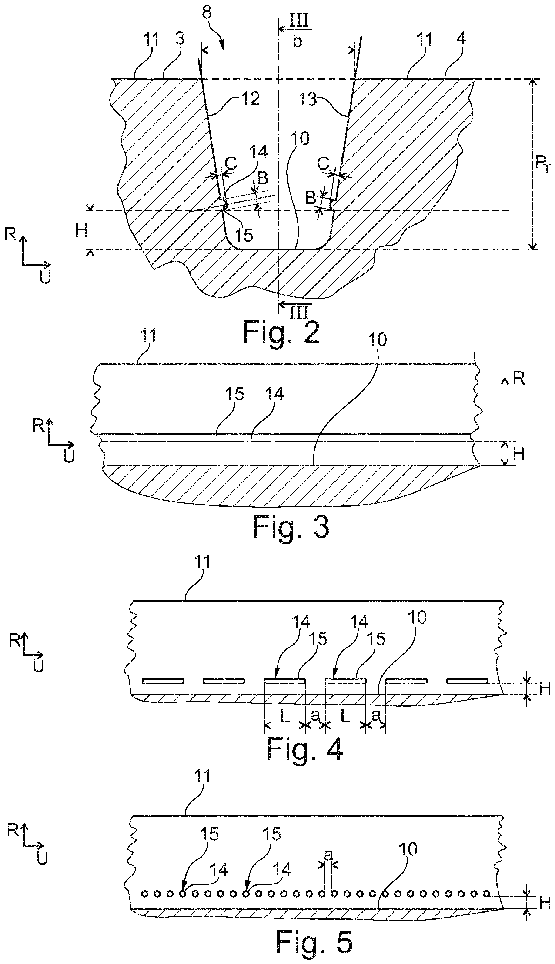

Die weitere Ausbildung der Umfangsrillen 6,7,8 und 9 wird im Folgenden an Hand der in Fig.2 dargestellten Umfangsrille 8 beschrieben. Die anderen Umfangsrillen 6,7 und 9 sind in entsprechend analoger Weise ausgebildet.

Wie in Fig.2 am Beispiel der Umfangsrille 8 dargestellt ist, erstrecken sich die Rillenwände 12 und 13 dabei in den Schnittebenen, welche die Reifenachse beinhalten, ausgehend vom Rillengrund 10 im Wesentlichen geradlinig nach radial außen bis zur radial äußeren Oberfläche 11 der durch die jeweilige Rillenwand 12 bzw. 13 begrenzten Umfangsrippe 3 bzw. 4. Bei dem in Fig. 2 dargestellten Ausführungsbeispiel der Umfangsrille 8 bildet die Rillenwand 12 die zur Umfangsrille 8 hin gerichtete Flanke der Umfangsrippe 3 und die Rillenwand 13 die zur Umfangsrille 8 hin gerichtete Flanke der Umfangsrippe 4. Die Umfangsrillen 8 ist mit einer Rillentiefe P_{T} ausgebildet, welche jeweils ausgehend von der radial äußeren Oberfläche 11 der Umfangsrippen 3 und 4 an deren jeweiliger Schnittposition mit den Flanken 12 bzw. 13 in radialer Richtung R nach innen bis zum tiefsten Punkt des Rillengrundes 10 bemessen wird. Die Profiltiefe P_{T} ist mit 8mm ≤ P_{T} ≤ 36mm ausgebildet.

Der Rillengrund 10 ist in den Schnittebenen, welche die Reifenachse beinhalten, über den wesentlichen Teil ihrer Erstreckung geradlinig ausgebildet.

Wie in Fig.2 und Fig.3 dargestellt ist, ist in beiden Rillenwänden 12 und 13 jeweils in einem in radialer Richtung R gemessenen Abstand H vom Rillengrund 10 ein Nachschneideindikator 14 ausgebildet.

Die weitere Beschreibung und Erläuterung des Nachschneideindikators 14 wird der Einfachheit halber im Folgenden lediglich an der Ausbildung des Nachschneideindikators 14 der Rillenwand 12 weiter erläutert. In analoger Weise ist auch in der Rillenwand 13 ein entsprechend ausgebildeter Nachschneideindikator 14 ausgebildet. In anderer Ausführung ist der Nachschneideindikator 14 jeweils nur in der Rillenwand 12 ausgebildet.

Der Nachschneideindikator 14 ist in Form einer Erhebung 15 in der Rillenwand 12 ausgebildet. Die Erhebung 15 ist dabei ausgehend von der in den Schnittdarstellungen, welche die Reifenachsen beinhalten, im Wesentlichen geradlinig erstreckten Rippenflanke der Umfangsrippe 3, welche die Rillenwand 12 bildet, mit einer senkrecht zur Rillenwand 12 gemessenen Erhebungshöhe c mit 0,2 mm ≤ c ≤ 3mm in die Umfangsrille 8 hinein erstreckten ausgebildet.

Die Erhebung 15 ist im dargestellten Ausführungsbeispiel - wie in Fig.2 und Fig.3 zu erkennen ist - als eine über den gesamten Umfang des Fahrzeugluftreifens erstreckte, feine Rippe 15 ausgebildet. Die Rippe 15 ist mit einer senkrecht zur Rillenwand 12 gemessenen Rippenhöhe c und mit einer längs der Rillenwand 12 in der Rillenwand 12 in der vom Rillengrund 10 nach radial außen gemessenen Rippenbreite B mit 0,2 mm ≤ B ≤ 5mm ausgebildet. Die Rippe 15 erstreckt sich in ihrer Längserstreckung in Umfangsrichtung U über den gesamten Umfang des Fahrzeugluftreifens und bildet dabei eine konzentrisch zur Reifenachse gebildete, linienförmige Erhebung im radialen Abstand H zum Rillengrund 10.

Der Abstand H ist dabei derart gewählt, dass er der radialen Position der Umfangsrille 8 entspricht, bei der - sobald das Laufstreifenprofil bis zu dieser radialen Position abgefahren ist - spätestens die Umfangsrille 8 nachgeschnitten werden sollte. Die als Rippe ausgebildete Erhebung 15 bildet somit einen Nachschneideindikator 14. Solange der Nutzer die Rippe 15 und somit den Nachschneideindikator 14 optisch erkennt, ist ein Nachschneiden zwar möglich, aber noch nicht erforderlich. Sobald das Laufstreifenprofil soweit abgefahren ist, dass aufgrund des Abriebes die als Rippe ausgebildete Erhebung 15 und somit der Nachschneideindikator 14 nicht mehr zu erkennen ist, sollte unverzüglich nachgeschnitten werden.

In Fig.4 ist eine alternative Ausbildung gezeigt, bei der derartige rippenförmige Erhebungen 15 mit einer begrenzten in Umfangsrichtung U ausgebildeten Erstreckungslänge L mit L ≥ 2mm in Umfangsrichtung U des Fahrzeugluftreifens hintereinander angeordnet sind. Dabei sind eine Vielzahl derartiger rippenförmiger Erhebungen 15 über den Umfang des Fahrzeugluftreifens verteilt angeordnet. Jeweils zwei hintereinander angeordnete als rippenförmiger Erhebungen 15 sind dabei im Abstand a zueinander mit 2mm ≤ a ≤ 25mm - beispielsweise mit a = 5mm - in der Rillenwand 12 angeordnet. Die in Umfangsrichtung U hintereinander angeordneten rippenförmigen Erhebungen 15 sind dabei jeweils in radialer Richtung R im Abstand H vom Rillengrund angeordnet ausgebildet und bilden jeweils einen Nachschneideindikator 14. Sobald die Nachschneideindikatoren 14 durch Abrieb verschwunden sind, sollte spätestens die Umfangsrille 8 nachgeschnitten werden.

Die Fig.5 zeigt ein weiteres Ausführungsbeispiel, bei welchem die in Umfangsrichtung U hintereinander angeordneten Erhebungen 15 in ihrem Erhebungsgrund eine Schnittkontur mit der Rillenwand 12 bilden, die kreisförmig, elliptisch oder oval ist. Die in Umfangsrichtung U hintereinander angeordneten Erhebungen 15 sind im Ausführungsbeispiel von Fig.4 jeweils im Abstand a zueinander angeordnet und bilden jeweils einen Nachschneideindikator 14.

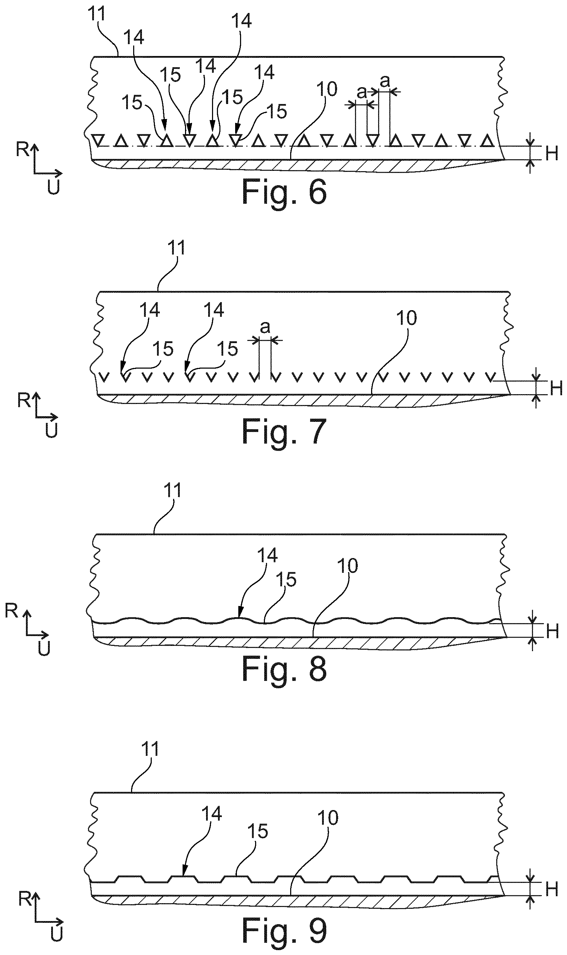

Fig.6 zeigt eine weitere alternative Ausbildung derartiger über den Umfang des Fahrzeugluftreifens verteilt und hintereinander angeordneter Erhebungen 15, die jeweils einen Nachschneideindikator 14 bilden. In diese Ausführung bilden die Erhebungen 15 an ihrem Erhebungsgrund in der Rillenwand 12 jeweils eine dreieckförmige Schnittkontur mit der Rillenwand 12. In einer Ausführung sind die Dreiecke dabei jeweils mit einer Dreieckspitze in radialer Richtung R nach innen hin ausgerichtet und enden mit dieser Spitze in radialer Richtung nach innen in dem in radialer Richtung gemesssenen Abstand H vom Rillengrund 10. In anderer Ausführung sind die Dreiecke jeweils mit einer Spitze in radialer Richtung R nach außen hin angeordnet. Ihre dieser Spitze gegenüberliegende Dreiecksseite ist in dem in radialer Richtung gemessenen Abstand H vom Rillengrund 10 angeordnet. In eine weiteren in Fig.6 dargestellter Ausführung sind über den Umfang des Reifens verteilt in alternierender Abfolge radiale Erhebungen 15, deren Dreiecksspitze in radialer Richtung R nach innen gerichtet ist, und radiale Erhebungen 15, deren Dreiecksspitze in radialer Richtung R nach außen hin gerichtet ist, hintereinander angeordnet.

Die Ausführung von Fig.3 mit der Ausbildung einer rippenförmigen Erhebung 15 zeigt dabei eine linienförmige Erhebung, welche sich über den gesamten Umfang des Fahrzeugluftreifens konzentrisch zur Reifenachse erstreckt.

Fig.8 zeigt eine alternative Ausführung, bei welcher die Linienform längs einer konzentrisch zur Reifenachse ausgebildeten Kreislinie sich wellenförmig über den gesamten Umfang erstreckt, wobei die in radialer Richtung R nach innen hin gerichteten Wellentäler mit ihrem Extremwert (Minimum) in einem in radialer Richtung R gemessenen Abstand H vom Rillengrund 10 ausgebildet sind. Auch bei dieser Ausführung wird somit durch die den Nachschneideindikator 14 bildende Erhebung 15 optisch angezeigt, dass bei vollständigem Verschwinden der Erhebung 15 und somit des Nachschneideindikators 14 der Zustand erreicht ist, in welchem spätestens nachgeschnitten werden sollte.

Fig.9 zeigt ein weiteres Ausführungsbeispiel, bei welchem die Linienform längs einer konzentrisch zur Reifenachse ausgebildeten Kreislinie meanderförmig erstreckt verlaufend ausgebildet ist, wobei auch hier die über den Umfang des Fahrzeugluftreifens sich wiederholenden radialen Tiefpunkte der Erhebung 15 jeweils mit radialem Abstand H zum Rillengrund 10 ausgebildet sind. Die Erhebungen 15 zeigen somit als Nachschneideindikator 14 bei vollständigem Verschwinden der radialen Erhebungen 15 und somit des Nachschneideindikators 14 an, dass der Zustand erreicht ist, in welchem spätestens nachgeschnitten werden sollte.

Die Fig. 4 zeigt eine Ausbildung, bei welcher linienförmige Erhebungen 15 in Form von Rippen über den Umfang des Fahrzeugluftreifens verteilt, jeweils im Abstand a zueinander ausgebildet sind. Die linienförmigen Erhebungen 15 sind dabei jeweils in Umfangsrichtung U des Fahrzeugluftreifens erstreckt ausgerichtet.

Fig. 7 zeigt ein alternatives Ausführungsbeispiel in welchem die über den Umfang verteilt und in Umfangsrichtung U hintereinander angeordneten, linienförmigen Erhebungen 15 jeweils in ihrem Verlauf V-förmig ausgebildet sind, wobei die Spitze des V in radialer Richtung R des Fahrzeugluftreifens nach innen hin weist und im radialen Abstand H vom Rillengrund 10 ausgebildet ist. Auch in diesem Ausführungsbeispiel sind die in Umfangsrichtung U benachbarten Erhebungen jeweils im Abstand a zueinander angeordnet. Die Erhebungen 15 bilden auch in diesem Ausführungsbeispiel Nachschneidindikatoren 14. Sobald die Erhebungen 15 mit der Spitze der V-Form verschwindet, ist spätestens der Zeitpunkt des Nachschneidens gekommen.

Der Abstand H ist in Abhängigkeit von dem jeweiligen Profil des Nutzfahrzeugreifens und der für das Nachschneiden bereitgestellten zusätzlichen Gummidicke mit 1,5 mm ≤ H ≤ 8mm ausgebildet.

### Bezugszeichenliste

### (Teil der Beschreibung)

- 1: Umfangsrippe
- 2: Umfangsrippe
- 3: Umfangsrippe
- 4: Umfangsrippe
- 5: Umfangsrippe
- 6: Umfangsrille
- 7: Umfangsrille
- 8: Umfangsrille
- 9: Umfangsrille
- 10: Rillengrund
- 11: Radial äußere Oberfläche
- 12: Rillenwand
- 13: Rillenwand
- 14: Nachschneideindikator
- 15: Erhebung

## Patentansprüche

1. Laufstreifenprofil eines Fahrzeugluftreifens - insbesondere für Nutzfahrzeuge - mit nachschneidbarem Laufstreifenprofil mit radial erhabenen Profilelementen (1,2,3,4,5) und mit Rillen (6,7,8,9), welche jeweils zwei benachbarte Profilelemente (1,2,3,4,5) voneinander trennen, wobei die Rillen (6,7,8,9) in radialer Richtung R nach innen hin von einem Rillengrund (10) und in axialer Richtung zu beiden Seiten hin von einer die Rillenwand (12,13) bildenden Profilelementflanke begrenzt sind und wobei in einer oder mehreren Rillen (3) jeweils wenigstens ein Nachschneideindikator (14) zur Anzeige der Nachscheidetiefe ausgebildet ist,
**dadurch gekennzeichnet,**
**dass** in wenigstens einer Rille (8) alle darin ausgebildeten Nachschneideindikatoren (14) mit einem einer in radialer Richtung R gemessenen Höhe H mit H>0mm oberhalb des Rillengrundes (10) in einer Rillenwand (12) ausgebildet sind, wobei die Höhe H der maximalen radialen Abriebposition des Reifens zum Nachschneiden entspricht.

2. Laufstreifenprofil gemäß den Merkmalen von Anspruch 1,
wobei in einer Rillenwand (12) der Rille (8) eine oder mehrere hintereinander angeordnete, über den Umfang des Reifens verteilt angeordnete Erhebungen (15) der die Rillenwand bildenden Profilelementflanke in dem in radialer Richtung R gemessenen Abstand H mit H>0mm oberhalb des Rillengrundes (10) ausgebildet sind, die jeweils einen Nachschneideindikator (14) bilden.

3. Laufstreifenprofil gemäß den Merkmalen von Anspruch 1 oder 2,
wobei H mit 1,5mm≤H≤8mm ausgebildet ist.

4. Laufstreifenprofil gemäß den Merkmalen von einem oder mehreren der vorangegangenen Ansprüche,
wobei die Erhebung (15) mit einer senkrecht zur Rillenwand (12) gemessenen maximalen Erhebungshöhe c mit 0,2mm≤c≤3mm und mit einer ausgehend vom Abstand H vom Rillengrund (10) längs der radialen Erstreckung der Erhebung (15) in der Rillenwand (12) gemessenen maximalen Erstreckungsbreite B mit 0,2mm≤B≤3mm ausgebildet ist.

5. Laufstreifenprofil gemäß den Merkmalen von einem oder mehreren der vorangegangenen Ansprüche,
wobei die Erhebung (15) eine in Umfangsrichtung U des Reifens ausgerichtete rippenförmige Erhebung (15) mit einer in der Rillenwand längs deren radialer Erstreckung gemessenen Rippenbreite B und mit einer senkrecht zur Rippenwand gemessenen Rippenhöhe c ausgebildet ist.

6. Laufstreifenprofil gemäß den Merkmalen von Anspruch 5,
bei dem die rippenförmige Erhebung (15) eine über den gesamten Umfang des Reifens erstreckte Rippe ist und dabei einen über den gesamten des Reifens erstrechten Nachschneideindikator (14) bildet.

7. Laufstreifenprofil gemäß den Merkmalen von Anspruch 5,
bei dem die rippenförmige Erhebung (15) als eine in Umfangsrichtung U erstreckte Rippe der in Umfangsrichtung in der Rillenwand (12) gemessenen maximalen Erstreckungslänge L mit L≥2mm ist,
bei dem über den Umfang des Reifens in der Rillenwand (12) im Abstand H vom Rillengrund (10) eine Vielzahl derartiger Rippen (15) hintereinander verteilt und beabstandet voneinander angeordnet ausgebildet sind, die jeweils einen Nachschneideindikator (14) bilden und
bei dem insbesondere der in der Rillenwand gemessene Abstand a zweier in Umfangsrichtung U hintereinander angeordneter Rippen (15) mit 2mm≤a≤25mm ausgebildet ist.

8. Laufstreifenprofil gemäß den Merkmalen von einem oder mehreren der Ansprüche 1 bis 4,
wobei die Erhebung (15) an ihrem Erhebungsgrund in der Rillenwand (12) mit einer Schnittkontur ausgebildet ist, die oval, elliptisch oder dreieckig ist.

9. Laufstreifenprofil gemäß den Merkmalen von einem oder mehreren der Ansprüche 1 bis 4,
wobei die Erhebung (15) eine längs der Rillenwand (12) erstreckte linienförmige Erhebung (15) ist.

10. Laufstreifenprofil gemäß den Merkmalen von Anspruch 9,
wobei die Erhebung (15) über den gesamten Umfang des Reifens erstreckte linienförmige Erhebung (15) ist.

11. Laufstreifenprofil gemäß den Merkmalen von Anspruch 5,
bei dem die linienförmige Erhebung (15) kreislinienförmig konzentrisch zur Reifenachse erstreckt ausgebildet ist.

12. Laufstreifenprofil gemäß den Merkmalen von Anspruch 5,
bei dem die linienförmige Erhebung (15) längs einer konzentrisch zur Reifenachse ausgebildeten Kreislinie wellenförmig oder mäanderförmig erstreckt ausgebildet ist.

13. Laufstreifenprofil gemäß den Merkmalen von Anspruch 9,
bei dem die linienförmige Erhebung (15) längs ihrer linienförmigen Erstreckung eine V-Form bildet, wobei die Spitze der V-Form in radialer Richtung R des Reifens nach innen weist und bei dem über den Umfang des Reifens hinweg eine Vielzahl derartiger linienförmigen Erstreckung (15) verteilt und hintereinander angeordnet ausgebildet sind.

## Claims

1. Tread profile of a pneumatic vehicle tire - in particular for utility vehicles - having a regroovable tread profile with radially elevated profile elements (1, 2, 3, 4, 5) and with grooves (6, 7, 8, 9) which separate in each case two adjacent profile elements (1, 2, 3, 4, 5) from one another, wherein the grooves (6, 7, 8, 9) are delimited inward in a radial direction R by a groove base (10) and to both sides in an axial direction by a profile element flank which forms the groove wall (12, 13), and wherein in each case at least one regrooving indicator (14) for indicating the regrooving depth is formed in one or more grooves (3),
**characterized**
**in that**, in at least one groove (8), all of the regrooving indicators (14) formed therein are formed in a groove wall (12) at a height H, measured in the radial direction R, of H>0mm above the groove base (10), wherein the height H corresponds to the maximum radial wear position of the tire for the regrooving.

2. Tread profile as per the features of Claim 1, wherein, in a groove wall (12) of the groove (8), one or more elevations (15), which are arranged one behind the other and so as to be distributed over the circumference of the tire, of the profile element flanks that form the groove wall are formed at a distance H, measured in the radial direction R, of H>0mm above the groove base (10), which elevations in each case form a regrooving indicator (14) .

3. Tread profile as per the features of Claim 1 or 2, wherein H is configured such that 1.5mm≤H≤8mm.

4. Tread profile as per the features of one or more of the preceding claims,
wherein the elevation (15) is formed with a maximum elevation c, measured perpendicular to the groove wall (12), of 0.2mm≤c≤3mm and with a maximum extent width B, measured along the radial extent of the elevation (15) in the groove wall (12) proceeding from the distance H from the groove base (10), of 0.2mm≤B≤3mm.

5. Tread profile as per the features of one or more of the preceding claims,
wherein the elevation (15) is formed a rib-like elevation (15) which is oriented in a circumferential direction U of the tire and which has a rib width B measured in the groove wall along the radial extent thereof and has a rib height c measured perpendicular to the rib wall.

6. Tread profile as per the features of Claim 5,
in which the rib-like elevation (15) is a rib extending over the entire circumference of the tire and thus forms a regrooving indicator (14) extending over the entire of the tire.

7. Tread profile as per the features of Claim 5,
in which the rib-like elevation (15) is as a rib which extends in the circumferential direction U and which has the maximum extent length L, measured in the circumferential direction in the groove wall (12), of L≥2mm,
in which, over the circumference of the tire in the groove wall (12), at a distance H from the groove base (10), a multiplicity of such ribs (15) are formed so as to be distributed one behind the other and arranged spaced apart from one another, which ribs form in each case one regrooving indicator (14), and
in which, in particular, the distance a, measured in the groove wall, between two ribs (15) arranged one behind the other in the circumferential direction U is configured such that 2mm≤a≤25mm.

8. Tread profile as per the features of one or more of Claims 1 to 4,
wherein the elevation (15) is, at its elevation base in the groove wall (12), formed with an intersection contour which is oval, elliptical or triangular.

9. Tread profile as per the features of one or more of Claims 1 to 4,
wherein the elevation (15) is a linear elevation (15) extending along the groove wall (12).

10. Tread profile as per the features of Claim 9,
wherein the elevation (15) is a linear elevation (15) extending over the entire circumference of the tire.

11. Tread profile as per the features of Claim 5,
in which the linear elevation (15) is formed so as to extend in the manner of a circular line concentrically with respect to the tire axis.

12. Tread profile as per the features of Claim 5,
in which the linear elevation (15) is formed so as to extend in undulating or meandering fashion along a circular line formed concentrically with respect to the tire axis.

13. Tread profile as per the features of Claim 9,
in which the linear elevation (15) forms a V shape along its linear extent, wherein the tip of the V shape points inward in the radial direction R of the tire, and in which, over the circumference of the tire, a multiplicity of such linear extent (15) are formed so as to be distributed and arranged one behind the other.

## Revendications

1. Profil de bande de roulement d'un pneumatique de véhicule - en particulier pour des véhicules utilitaires - avec un profil de bande de roulement recreusable avec des éléments de profil radialement surélevés (1, 2, 3, 4, 5) et avec des rainures (6, 7, 8, 9), qui séparent chaque fois l'un de l'autre deux éléments de profil voisins (1, 2, 3, 4, 5), dans lequel les rainures (6, 7, 8, 9) sont limitées en direction radiale R vers l'intérieur par un fond de rainure (10) et en direction axiale vers les deux côtés par un flanc d'élément de profil formant la paroi de rainure (12, 13) et dans lequel respectivement au moins un indicateur de recreusage (14) est formé dans une ou plusieurs rainures (3) pour indiquer la profondeur de recreusage, **caractérisé en ce que** tous les indicateurs de recreusage (14) formés dans au moins une rainure (8) sont formés avec une hauteur H mesurée en direction radiale R avec H > 0 mm au-dessus du fond de rainure (10) dans une paroi de rainure (12), dans lequel la hauteur H correspond à la position d'usure radiale maximale du pneumatique pour le recreusage.

2. Profil de bande de roulement selon les caractéristiques de la revendication 1, dans lequel une ou plusieurs protubérance(s) (15), disposées l'une derrière l'autre et réparties sur la périphérie du pneumatique, du flanc d'élément de profil formant la paroi de rainure sont formées dans une paroi de rainure (12) de la rainure (8) à une distance H mesurée en direction radiale R avec H > 0 mm au-dessus du fond de rainure (10), et forment respectivement un indicateur de recreusage (14).

3. Profil de bande de roulement selon les caractéristiques de la revendication 1 ou 2, dans lequel H est réalisée avec 1,5 mm ≤ H ≤ 8 mm.

4. Profil de bande de roulement selon les caractéristiques d'une ou de plusieurs des revendications précédentes, dans lequel la protubérance (15) est réalisée avec une hauteur de protubérance maximale c mesurée perpendiculairement à la paroi de rainure (12) avec 0,2 mm ≤ c ≤ 3 mm et avec une largeur d'extension maximale B mesurée à partir de la distance H du fond de rainure (10) le long de l'extension radiale de la protubérance (15) dans la paroi de rainure (12), avec 0,2 mm ≤ B ≤ 3 mm.

5. Profil de bande de roulement selon les caractéristiques d'une ou de plusieurs des revendications précédentes, dans lequel la protubérance (15) est réalisée une protubérance en forme de nervure (15) orientée dans la direction périphérique U du pneumatique et avec une largeur de nervure B mesurée dans la paroi de rainure le long de son extension radiale et avec une hauteur de nervure c mesurée perpendiculairement à la paroi de nervure.

6. Profil de bande de roulement selon les caractéristiques de la revendication 5, dans lequel la protubérance en forme de nervure (15) est une nervure s'étendant sur toute la périphérie du pneumatique et forme en l'occurrence un indicateur de recreusage (14) s'étendant sur la totalité du pneumatique.

7. Profil de bande de roulement selon les caractéristiques de la revendication 5,
dans lequel la protubérance en forme de nervure (15) est d'une nervure s'étendant dans la direction périphérique U avec une longueur d'extension maximale L mesurée dans la direction périphérique dans la paroi de rainure (12), avec L ≥ 2 mm,
dans lequel une multiplicité de telles nervures (15) sont réalisées sous forme répartie l'une derrière l'autre sur la périphérie du pneumatique dans la paroi de rainure (12) à la distance H du fond de rainure (10) et espacées l'une de l'autre, qui forment chacune un indicateur de recreusage (14), et
dans lequel en particulier la distance a mesurée dans la paroi de rainure entre deux nervures (15) disposées l'une derrière l'autre dans la direction périphérique U est réalisée avec 2 mm ≤ a ≤ 25 mm.

8. Profil de bande de roulement selon les caractéristiques d'une ou de plusieurs des revendications 1 à 4, dans lequel la protubérance (15) est réalisée à son pied de protubérance dans la paroi de rainure (12) avec un contour en coupe, qui est ovale, elliptique ou triangulaire.

9. Profil de bande de roulement selon les caractéristiques d'une ou de plusieurs des revendications 1 à 4, dans lequel la protubérance (15) est une protubérance en forme de ligne (15) s'étendant le long de la paroi de rainure (12).

10. Profil de bande de roulement selon les caractéristiques de la revendication 9, dans lequel la protubérance (15) est une protubérance en forme de ligne (15) s'étendant sur toute la périphérie du pneumatique.

11. Profil de bande de roulement selon les caractéristiques de la revendication 5, dans lequel la protubérance en forme de ligne (15) est réalisée en forme de ligne circulaire s'étendant de façon concentrique à l'axe du pneumatique.

12. Profil de bande de roulement selon les caractéristiques de la revendication 5, dans lequel la protubérance en forme de ligne (15) est réalisée sous forme ondulée ou sinueuse s'étendant le long d'une ligne circulaire réalisée de façon concentrique à l'axe du pneumatique.

13. Profil de bande de roulement selon les caractéristiques de la revendication 9, dans lequel la protubérance en forme de ligne (15) présente une forme en V le long de son extension en forme de ligne, dans lequel la pointe de la forme en V est tournée vers l'intérieur dans la direction radiale R du pneumatique et dans lequel une multiplicité de telle extension en forme de ligne (15) sont réparties et disposées l'une derrière l'autre sur la périphérie du pneumatique.
